# EUROPÄISCHE PATENTSCHRIFT

(11) **EP 0 714 696 B1**
(45) Veröffentlichungstag und Bekanntmachung des Hinweises auf die Patenterteilung: **01.12.1999**
(21) Anmeldenummer: 95109794.8
(22) Anmeldetag: 23.06.1995
(51) Int. Cl.: B01J 20/28, B01D 35/20, B01D 39/20

(54) **Adsorptions-Luftfilter und Verfahren zu dessen Herstellung**
Adsorption filter for air and process for preparing it
Filtre d'adsorption pour le nettoyage de l'air et procédé pour sa préparation

(30) Priorität: 01.12.1994 DE 4442713
(43) Veröffentlichungstag der Anmeldung: 05.06.1996
(73) Patentinhaber: Firma Carl Freudenberg, 69469 Weinheim (DE)
(72) Erfinder: Dabisch, Thomas, Dr., D-69509 Mörlenbach (DE); Grimm, Hansjörg, D-69469 Weinheim (DE); Grynaeus, Peter, Dr., D-69488 Birkenau (DE); Mühlfeld, Horst, D-64689 Grasellenbach (DE); Stini, Harald, Dr., D-69488 Birkenau (DE)

(56) Entgegenhaltungen:
- EP-A- 0 159 696
- EP-A- 0 356 859
- EP-A- 0 554 223
- DE-A- 3 719 233
- US-A- 4 061 807
- US-A- 5 332 426
- DATABASE WPI Section Ch, Week 8220 Derwent Publications Ltd., London, GB; Class A85, AN 82-40603E XP002027256 & JP 57 060 531 A (SANYO CHEM IND LTD) , 12.April 1982

## Beschreibung

Die Erfindung betrifft ein Adsorptions-Luftfilter der in der Präambel des ersten Produktanspruchs dargelegten Art. Sie betrifft ferner ein Verfahren zur Herstellung eines solchen Luftfilters.

Ein solches Luftfilter ist beschrieben in US-A-5,332,426. Es handelt sich dabei um eine selbsttragende Filterstruktur aus Adsorber- und Binder-Partikeln mit nicht nur guter Filterleistung und guter Adsorptionskapazität, sondern insbesondere mit einem sehr geringen Druckverlust, d.h. hoher Luftdurchlässigkeit. Dieses Merkmal ist wichtig bei der Anwendung als Luftaufbereitungsfilter, als Raumluftfilter, als Automobil-Belüftungsfilter für dessen Innenraum und als Filter in Einweg-Gasmasken.

US-A-5,332,426 schlägt in diesem Zusammenhang eine selbsttragende, geformte Struktur von Adsorber-Partikeln irregulärer Gestalt vor, welche miteinander durch thermoplastische Bindemittel-Partikeln ebenfalls irregulärer Gestalt verbunden sind, wobei die Bindemittel-Partikeln wesentlich kleiner als die Adsorber-Partikeln sind. Im Interesse eines geringen Druckverlustes sind dabei mehrere Adsorber- und Binder-Partikeln zu Agglomeraten verschweißt, deren Form und Verteilung ebenfalls irregulär ist. Sie besitzen eine mittlere Größe von mindestens 15 mesh. Zwischen diesen Agglomeraten finden sich Lücken, welche frei von Materie sind und im Filter ein Porenvolumen von ungefähr 70 bis 85 % ausbilden. Es entsteht somit eine offene Matrix geringer Dichte.

Das Herstellungsverfahren beruht auf dem Vorerhitzen der adsorbierenden Partikeln auf eine Temperatur oberhalb des Schmelzbereichs des Bindemittels, dem anschließenden Vermischen der erhitzten Adsorber-Partikeln mit den thermoplastischen Bindemittel-Partikeln unter Ausbildung von mindestens 15 mesh feinen Agglomeraten, dem Aussieben definierter Agglomerat-Fraktionen, dem Verformen der Agglomerate zu dem gewünschten Flächengebilde in einer offenen Form und dem Erhitzen des Flächengebildes auf eine Temperatur oberhalb des Schmelzbereichs des Bindemittels. Nach dem Abkühlen liegt der agglomerierte Filterkörper vor.

Die Ausbildung der Agglomerate erfordert zwei getrennte Verfahrensschritte des Aufheizens vor und nach dem Vermischen, was einen beträchtlichen Aufwand an Zeit und Energie erfordert; für jeden Verfahrensschritt werden Zeiten von 40 Minuten genannt. Um Dichtegradienten innerhalb der geformten Struktur zu vermeiden, wird geraten, die Form beim Erhitzen des Gemischs mindestens 1 mal umzuwenden. Auch diese Vorgabe trägt zur Verlängerung des Herstellungsverfahrens bei. Noch ein weiterer Verfahrensschritt ist bei der bekannten Vorgehensweise notwendig, um Adsorptions-Hilfsmittel, z.B. K₂CO₃ als wäßrige Lösung, vor dem ersten Erhitzen den Adsorber-Partikeln zuzugeben. Diese Behandlung dient der Chemisorption saurer Gase durch deren Neutralisation.

Am Luftfilter selbst tragen die relativ großen Räume (Poren) zwischen den Agglomeraten zwar zu einer deutlichen Verringerung des Druckverlustes bei. In der Praxis und - wie auch aus den Figuren zu US-A-5,332,426 ersichtlich - führen derart groß dimensionierte Lücken dazu, daß eine beträchtliche Menge zu adsorbierender Gasmoleküle diese Lücken passiert, ohne in den physikalischen Einflußbereich der adsorptiv wirkenden Oberflächen des Adsorbens zu gelangen. Dieser Effekt verschlechtert daher die Adsorptionskinetik des Filters.

Die vorliegende Erfindung hat zur Aufgabe, die genannten Nachteile zu vermeiden. Die Filterstruktur soll keine Lücken aufweisen, welche so groß dimensioniert sind, daß die Adsorptionskinetik dadurch in der oben beschriebenen Weise verschlechtert wird. Dennoch soll der Druckverlust vergleichbar mit den niedrigen Werten sein, wie sie erreicht werden mit der Agglomerate aufweisenden Struktur des Standes der Technik. Das Herstellungsverfahren soll um die Schritte der Agglomeratbildung, insbesondere das Vorheizen der Adsorber-Partikeln, vermindert werden. Einflüsse des Eigengewichtes der Schüttung in der Form vor und während des Sinterprozesses sollen vermieden werden. Die Ausrüstung mit gegebenenfalls verwendeten Sorptionshilfsmitteln soll nicht in einem separaten Verfahrensschritt erfolgen, sondern in den Verfahrensablauf selbst integriert werden. Die Filterleistung, d.h. die hohe Luftdurchlässigkeit, Adsorptionskinetik und Adsorptionskapazität, sollen nicht signifikant von der Luftfilter-Struktur des Standes der Technik abweichen. Das einzusetzende Bindemittel soll aufgrund der noch zu beschreibenden Tatsache, daß erfindungsgemäß Wasser bzw. Wasserdampf beim Herstellungsprozeß beteiligt ist, hydrolysestabil sein und dabei auch seine Schmelzviskosität nur unwesentlich verändern.

Die Lösung dieser Aufgabe wird durch die Kennzeichen des ersten Produkt- und Verfahrensanspruchs angegeben. Jeweils vorteilhafte Ausgestaltungen sind durch die Unteransprüche offenbart.

Sowohl die Adsorber- als auch die Bindemittel-Partikeln können jede beliebige reguläre oder irreguläre Gestalt besitzen, wobei der Schmelzbereich der Bindemittel-Partikeln kleiner sein soll als derjenige der Adsorber-Partikeln. Hierunter ist, unabhängig von der Meßmethode, zu verstehen, daß bei der tiefsten Temperatur, bei welcher das Bindemittel vollständig in schmelzflüssigem Zustand vorliegt, der Adsorber auf keinen Fall zu schmelzen beginnen darf.

Die mittlere Größe der Bindemittel-Partikeln kann 5 bis 90 % derjenigen der Adsorber-Partikeln betragen und wird zweckmäßigerweise so gewählt, daß die geringstmögliche Menge an für die Filterleistung ineffektivem Bindemittel in der Struktur vorliegt und dennoch die Adsorber-Partikeln beständig aneinander haften.

Die absolute Größe der Adsorber- und Bindemittel-Partikeln unterliegt bei der vorliegenden Erfindung einer wesentlich geringeren Einschränkung als im Stand der Technik gemäß US-A-5,332,426. So können die Adsorber-Partikeln eine Größe von 100 bis 7 000 µm besitzen und eine irreguläre oder reguläre Gestalt, letztere z.B. kugel-, quader- oder sogar stäbchenähnlich, aufweisen. Bei letzterem Habitus ist unter dem Begriff Partikelgröße die Länge der Stäbchen zu verstehen.

Selbstverständlich ist von der filtertechnisch bekannten Regel auszugehen, daß kleinere Partikeln adsorptiven Materials eine bessere Filterleistung, d.h. Adsorptionskinetik, zeigen, jedoch unter Inkaufnahme eines höheren Druckverlustes.

Diese selbsttragende Luftfilterstruktur ist im wesentlichen frei von einheitlichen, gleichförmig im gesamten Filtervolumen verteilten Agglomerat-Strukturen, die einzeln mit bloßem Auge sichtbar wären. Vielmehr weist sie eine völlig irreguläre Verteilung von Adsorber-und Binderpartikeln auf, weswegen gleichförmige Muster von Agglomerat-Strukturen mit dem bloßen Auge nicht erkennbar sind. Dadurch fällt auch das Porenvolumen wesentlich kleiner aus; in der Volumeneinheit sind dabei diese Poren häufiger vorhanden als im Stand der Technik.

Das zu verwendende Bindemittel ist verfahrensbedingt insofern einer Beschränkung unterworfen, als es unter 100°C auf der Adsorber-Oberfläche nicht spreiten und somit diese nicht okkupieren darf.

Als geeignet wegen seiner guten Adhäsion auf den Adsorber-Partikeln, wegen seiner Hydrolysestabilität, seiner Elastizität und seines für das erfindungsgemäße Verfahren besonders geeigneten Schmelzverhaltens wurde ein thermoplastisches Polyurethan-Bindemittel gefunden. Dieses besitzt einen Schmelzbereich von 130 bis 140°C und liegt zwischen 130 und 180°C als hochviskose Schmelze vor, die sich über diesen Temperaturbereich nur geringfügig, auch bei Anwesenheit von Wasserdampf, in ihrer Viskosität verändert:
6,4 g/10 min bei 140°C und 2,16 kp Belastung,
15,4 g/10 min bei 160°C und 2,16 kp Belastung,
30,9 g/10 min bei 180°C und 2,16 kp Belastung
   (Meßwerte jeweils nach DIN 53 735).

Dieses Polyurethan-Bindemittel ist auf Basis von Polycaprolacton, Diphenylmethandiisocyanat und einer Kombination der Kettenverlängerer 1,4-Butandiol und 1,6-Hexandiol aufgebaut.

Das erfindungsgemäße Luftfilter besitzt ein Porenvolumen von 65 bis 80%, abhängig von Form und Größe der Adsorber-Partikeln. Seine Dichte beträgt 0,22 bis 0,35 g/cm³.

Wie in den Beispielen noch gezeigt werden wird, sind an 10,0 mm dicken Proben Luftdurchlässigkeiten von 80 bis 95 l/m².s zu erzielen, gemessen nach DIN EU 29 053A (Strömungswiderstandsmessung), bei 0,02 mbar.

Die n-Butan-Adsorptionskapazität, gemessen in Anlehnung an DIN 71 460, Teil 2 (Entwurf November 1994), bei einem Filtervolumen von 30 cm³ beträgt 199 mg, gemessen bei einem Volumenstrom von 30 000 cm³/min, ermittelt nach der Integralmethode im Bereich von 0 % bis 95 % Durchbruch.

Aufgrund dieser Daten erweisen sich die erfindungsgemäßen Luftfilter, je nach Schwerpunkt der Anforderungen, geeignet sowohl für Lüftungs- und Klimaanlagen von Räumen jeglicher Art, auch in Fahrzeugen, wo ein geringer Druckverlust von Bedeutung ist, als auch für Gasmasken, bei welchen die Adsorptionsleistung im Vordergrund steht. Verschlechterungen in den filterrelevanten Parametern gegenüber dem Stand der Technik ergeben sich nicht, wie in den Beispielen noch dargelegt werden wird.

In den meisten Fällen wird Aktivkohle als Adsorber-Material der Vorzug gegeben werden wegen der breiten Anwendbarkeit, der Verfügbarkeit und der toxischen Unbedenklichkeit. Um die Handhabbarkeit des Filters beim Fertigungsprozeß zu erhöhen und um die Sorptionsschicht zu schützen, hat sich der Einsatz von textilen Abdeckungen als zweckmäßig erwiesen. Die Fixierung einer solchen Abdeckung erfolgt dabei durch Verschweißen oder Verklammern mit dem Luftfilter.

Die Luftfilter-Struktur kann den Einsatzbedingungen und den Räumlichkeiten bei der Verwendung in beliebiger Form gezielt angepaßt werden. Es ist dabei auch möglich, eine oder beide Flächen des Filters zu strukturieren oder das gesamte Filter in Faltenform auszugestalten, um den zur Verfügung stehenden Einbauraum mit einer möglichst großen Filtermasse, bei gleichzeitig hoher Luftdurchlässigkeit, zu nutzen. Dies ist besonders wichtig, wenn das Luftfilter Bestandteil einer Luftzufuhr-Vorrichtung für die Innenraumbelüftung und/oder Klimatisierung von Kraftfahrzeugen sein soll.

Das Herstellungsverfahren beruht auf den folgenden Schritten:

Unter den oben benannten Limitierungen bezüglich der Partikelgrößen, der relativen Mengen und der Werkstoffe werden bei Raumtemperatur Adsorber-Partikeln mit Bindemittel-Partikeln im Gewichtsverhältnis 70:30 bis 95:5 vermischt und, unter weiterem Mischen, 15 bis 70 Gew.-% Wasser hinzugegeben, bezogen auf das Gesamtgemisch aus Adsorber, Bindemittel und Wasser. Innerhalb dieser Grenzen entspricht kleineren mittleren Partikelgrößen des Adsorber-Materials der höhere Anteil an Bindemittel, und umgekehrt. Der Mischprozeß erfolgt bei Raumtemperatur und dauert in der Regel allenfalls fünf Minuten.

Die Herstellung des Gemischs kann in jeder Vorrichtung erfolgen, welche eine homogene Mischung gewährleistet. Zweckmäßig wird ein Taumelmischer verwendet.

Das so hergestellte Gemisch wird als lockere Schüttung in den Hohlraum einer beheizbaren, druckdicht schließenden Preßform gegeben. Diese muß für eine Druckbelastung von mindestens 10 x 10⁵ Pa ausgelegt sein.

Nach dem Schließen der Preßform wird das Gemisch darin auf eine Temperatur von mindestens 100°C und mindestens 5°C oberhalb des Schmelzbereichs des Bindemittels, jedoch unterhalb des Schmelzbereichs des Adsorbers, für 5 bis 10 Minuten erhitzt. Dabei baut der entstehende Wasserdampf einen Druck im Preßkörper auf.

Anschließend erfolgt eine Dekompression unter Ablassen von Wasserdampf, welche nach 3 bis 5 Minuten beendet ist.

Nach dem Abkühlen wird die selbsttragende, geformte Filterstruktur aus dem Formhohlraum entnommen.

Das bei Raumtemperatur dem Adsober/Binder-Gemisch zugegebene Wasser belegt adsorptionsfähige Flächen der Adsorber-Partikeln und verhindert so deren übermäßige Belegung mit Schmelzkleber-Masse. Während des Erhitzens unter Druck hält der entstandene Dampf die adsorptionsfähigen Poren der Adsorber-Partikeln offen und lockert zusätzlich die Struktur der Adsorber/Binder-Partikeln gleichförmig auf: In der Filterschüttung bildet dieser Wasserdampf makroskopische Hohlräume, welche im fertigen Filter einem geringen Druckverlust förderlich sind. Die Bildung von Agglomeraten zur Erzielung desselben Zwecks in einem zusätzlichen, zeitaufwendigen Verfahrensschritt ist hiermit also nicht mehr notwendig.

Die entstandene Filterplatte hat einen besonders homogenen Aufbau, welcher zu einer hohen Biegefestigkeit führt. Mit bloßem Auge sind im wesentlichen keine Agglomerat-Strukturen erkennbar; Adsorber- und Bindemittelpartikeln sind völlig statistisch sowohl auf der Oberfläche als auch im Volumen verteilt. Diese Verteilung erfolgt bereits im Gemisch durch den Wasserzusatz. Das Eigengewicht der Schüttung spielt somit, im Gegensatz zum Stand der Technik, keine Rolle mehr, wodurch auch die Erfordernis entfällt, die Form gegebenenfalls mehrfach während des Aufheizens wenden zu müssen.

Ein weiterer Vorteil des Vorhandenseins von Wasser, jedoch in dampfförmiger Gestalt während des Formvorganges, besteht in der Eigenschaft des Wasserdampfes, den Wärmeübergang von den Formwandungen durch das Schüttgut hindurch zu beschleunigen, weswegen die Wirtschaftlichkeit des Verfahrens infolge geringerer Taktzeiten gesteigert wird.

Da Aktivkohle bekanntermaßen gegen Druck- und Temperatureinflüsse, auch bei Anwesenheit von Wasserdampf, besonders widerstandsfähig ist, wird man dieses Adsorbens bevorzugt für das erfindungsgemäße Verfahren einsetzen.

Als Bindemittel, welches resistent gegenüber den Bedingungen des erfindungsgemäßen Verfahrens ist, hat sich, wie bereits erwähnt, thermoplastisches Polyurethan mit einem Schmelzbereich von 130 bis 140°C erwiesen, wobei im Bereich bis 180°C eine hochviskose Schmelze vorliegt, deren Viskosität weitgehend von der Temperatur unabhängig ist. Dieses Polyurethan ist aufgrund seines Weichsegmentaufbaus aus Polycaprolacton unter den Einsatzbedingungen des fertigen Filters gegen Wasserdampf hydrolysestabil. Der niedrige Schmelzpunkt und die nahezu konstante Schmelzviskosität über einen breiten Temperaturbereich auch bei Gegenwart von Wasserdampf werden erreicht durch den Hartsegmentaufbau aus 1,4-Butandiol und 1,6-Hexandiol, kombiniert mit Diphenylethandiisocyanat.

Die Formkörper können beliebig miteinander zu Mehrschicht-Filtern kombiniert werden und auch auf ihren Oberflächen mit einer den Formwandungen entsprechenden Strukturierung versehen sein. Auch ist unter dem Begriff "Formkörper" durchaus auch eine gefaltete Zickzack-Form vorstellbar.

Das Verfahren ermöglicht auf besonders elegante und arbeitssparende Weise die gegebenenfalls gewünschte Zugabe von in Wasser dispergierbaren oder löslichen, die Sorption fördernden Substanzen oder auch von K₂CO₃ zur Chemisorption (Neutralisation) saurer Gase. Diese Zusätze werden in der gewünschten Menge einfach vor der Gemischbildung dem dafür verwendeten Wasser zugesetzt. Infolge der gleichmäßigen Druck-, Temperatur- und Materialverteilung im Formhohlraum während des Verpressens ist gewährleistet, daß diese Hilfsmittel gleichmäßig die sorptiven Oberflächen belegen.

Neben der Möglichkeit, mindestens zwei Luftfilter-Formteile mit unterschiedlichen sorptionsfördernden und anderen Hilfssubstanz-Zuschlägen nach der Einzelfertigung miteinander zu kombinieren, besteht eine besonders vorteilhafte Verfahrensvariante darin, daß man die lockere Schüttung im Formhohlraum ausbildet als Schichtung aus mindestens zwei Adsorber/Bindemittel-Phasen, wobei man den einzelnen Phasen unterschiedliche Mengen sorptionsfördernder Hilfssubstanzen zumischt. Nach dem Verpressen entsteht ein im Querschnitt mehrschichtiger Formkörper mit in seinen Schichten verschiedenen Sorptionseigenschaften.

Als "Sorption" werden hier alle Vorgänge bezeichnet, bei denen ein gasförmiger Stoff durch eine andere, mit ihm in Berührung kommende Festsubstanz selektiv durch Adsorption oder Chemisorption aufgenommen wird. Ohne die Erfindung auf die folgenden Substanzen zu limitieren, seien als Beispiele genannt: Aktivkohle und Knochenkohle, Kieselgel, Bleicherden, Kieselgur, aktiviertes Aluminiumoxid und aktivierter Bauxit; Kaliumcarbonat.

Die folgenden Beispiele sollen die Erfindung verdeutlichen:
Beispiel 1 bescheibt die Herstellung und die Eigenschaften einer besonders bevorzugten Filterstruktur. Beispiel 2 behandelt entsprechend die Verwendung größerer Adsorber-Partikeln bei reduzierter Bindemittelmenge, während das Beispiel 3 auf einer Materialkombination von Beispiel 1 und Beispiel 2 beruht. Das zuletzt folgende Vergleichsbeispiel zeigt die gemessenen filtertechnischen Daten des Standes der Technik auf.

### Beispiel 1

100,0 g Aktivkohle in Granulatform mit einer Partikelgrößen von 300 bis 800 µm,
18,0 g thermoplastisches Polyurethan-Pulver mit einer Partikelgröße von 10 bis 350 µm, mit einem Schmelzbereich von 135 bis 140°C und mit Schmelzindexwerten bei 140°C von 6,4 g/10 min, bei 160°C von 15,4 g/10 min und bei 180°C von 30,9 g/10 min, jeweils gemessen nach DIN 53 753 und bei einer Belastung von 2,16 kp,
und 80,0 g Wasser
wurden in einem Taumelmischer 5 min bei Raumtemperatur gemischt.

Das Gemisch wurde anschließend als lockere Schüttung in eine dichtschließende und für höhere Druckbelastung ausgelegte Form mit den Innenmaßen 188 mm x 250 mm x 15 mm eingebracht. In der geschlossenen Form wurde das Gemisch 6 min lang auf 180°C erhitzt. Anschließend wurde durch Öffnen eines an der Form angeschlossenen Ventils innerhalb von 3 Minuten der gebildete Wasserdampf abgelassen und gleichzeitig der Innendruck in der Form abgebaut. Nach dem Abkühlen konnte eine stabile, offenporige Platte mit einer Dicke von 10 mm und einer Dichte von 0,25 g/cm³ entformt werden.

An dem Formte wurde eine Luftdurchlässigkeit von 91 l/m².s gemessen nach DIN EU 29 053A. Die n-Butan-Adsorption (Integralmethode im Bereich von 0 % bis 95 %; in Anlehnung an DIN 71 460, Teil 2, Entwurf November 1994) betrug 199 mg n-Butan. Der Gesamtverlauf dieser Adsorption ist aus der tabellarischen Aufstellung am Ende der Beispiele ersichtlich.

### Beispiel 2

120,0 g Aktivkohle in Granulatform mit einer Partikelgröße von 500 bis 1 600 µm,
14,4 g thermoplastisches Polyurethan-Pulver wie in Beispiel 1
und 84,0 g Wasser

wurden wie in Beispiel 1 gemischt und unter Druckaufbau und anschließender Dekompression zu einer offenporigen Platte geformt. Das Formteil mit der Dichte von 0,28 g/cm³ zeigte eine Luftdurchlässigkeit von 84 l/m².s bei 0,02 mbar und eine n-Butan-Adsorption von 194 mg (Gesamtverlauf siehe Tabelle).

### Beispiel 3

60,0 g Aktivkohle in Granulatform mit einer Partikelgröße von 300 bis 800 µm,
60,0 g Aktivkohle in Granulatform mit einer Partikelgröße von 500 bis 1 600 µm,
18,0 g Polyurethan-Pulver wie in Beispiel 1 und
90,0 g Wasser

wurden gemäß dem Verfahren des Beispiels 1 zu einer offenporigen Platte mit einer Dichte von 0,29 g/cm³ geformt. An der Platte konnten eine Luftdurchlässigkeit von 87 l/m².s bei 0,02 mbar und eine n-Butan-Adsorption von 196 mg gemessen werden (Gesamtverlauf siehe Tabelle).

### Vergleichsbeispiel

Ein kommerziell erhältliches Filter, welches zum Zeitpunkt der Erfindung in den Fahrzeugen BMW E38 eingebaut wird und welches eine mit bloßem Auge erkennbare, regelmäßige Agglomeratstruktur entsprechend US-A-5,332,426 aufweist, wurde entsprechend Beispiel 1 getestet. Die Luftdurchlässigkeit betrug 87 l/m².s bei 0,02 mbar. Die n-Butan-Adsorption wurde zu 148 mg gefunden. Der Gesamtverlauf der n-Butan-Adsorption ist in der Tabelle dargelegt.

Aus den Beispielen und aus der Tabelle wird ersichtlich, daß bei einer adsorptiven Luftfilterstruktur die Kombination eines sehr geringen Druckverlustes mit gleichzeitig hoher Adsorptionsleistung, ohne Einbußen in der Adsorptionskinetik, überraschenderweise auch ohne den zeitaufwendigen Verfahrensschritt der Agglomeratbildung durch die Erfindung verwirklicht werden kann.

**Tabelle**

| Gesamtverlauf der n-Butanadsorption (in Anlehnung an DIN 71 460, Teil 2, Entwurf November 1994) Durchbruch des Gases (Angabe in %) | | | | |
|---|---|---|---|---|
| | Beispiel 1 | Beispiel 2 | Beispiel 3 | Vergleichsbeispiel |
| Zeit in Sekunden | | | | |
| 10 | 1,7 | 4,3 | 3,1 | 2,3 |
| 50 | 3,3 | 15,1 | 9,0 | 7 |
| 90 | 5,1 | 19,6 | 12,1 | 8,9 |
| 130 | 6 | 21,7 | 13,2 | 10,2 |
| 170 | 6,9 | 23,4 | 15,0 | 11,4 |
| 210 | 7,7 | 25,1 | 16,1 | 12,5 |
| 330 | 10 | 29 | 19,7 | -- |
| 610 | 15,7 | 36,1 | 26,2 | 24,2 |
| 1210 | 30,9 | 47,8 | 37,8 | -- |
| 1810 | 48,3 | 57,8 | 54,5 | 64,7 |
| 3010 | 77 | 74,1 | 76,2 | 87,4 |
| 3610 | 84,9 | 80,3 | 83,5 | 92,5 |
| 4090 | -- | -- | -- | 94,9 |
| 4210 | 90,2 | 84,5 | 88,4 | -- |
| 4810 | 93,1 | 88,4 | 92,0 | -- |
| 5130 | 95 | -- | -- | -- |
| 6250 | -- | -- | 95,5 | -- |
| 7370 | -- | 94,7 | -- | -- |

## Patentansprüche

1. Adsorptions-Luftfilter, bestehend aus einer selbsttragenden, geformten Struktur von Adsorber-Partikeln regulärer oder irregulärer Gestalt, welche miteinander durch Bindemittel-Partikeln mit ebenfalls regulärer oder irregulärer Gestalt verbunden sind, wobei der Schmelzbereich der Bindemittel-Partikeln kleiner ist als derjenige der Adsorber-Partikeln und wobei die mittlere Größe der Bindemittel-Partikeln kleiner ist als diejenige der Adsorber-Partikeln,
dadurch gekennzeichnet, daß die besagte selbsttragende Struktur räumlich im wesentlichen eine irreguläre Verteilung von Adsorber- und Bindemittel-Partikeln dergestalt aufweist,
daß die Adsorber-Partikeln eine mittlere Größe von 100 bis 7 000 µm besitzen,
daß das Material des Bindemittels unter 100°C auf der Adsorber-Oberfläche nicht spreitet
und daß dieses Material ein thermoplastisches Polyurethan ist, welches einen Schmelzbereich von 130 bis1 40°C aufweist, zwischen 130 und 180°C als hochviskose Schmelze mit im wesentlichen über den ganzen Temperaturbereich unverändernder Viskosität vorliegt und aufgebaut ist aus einem Weichsegmentanteil aus Polycaprolacton sowie aus einem Hartsegmentanteil aus 1,4-Butandiol und 1,6-Hexandiol mit Diphenylmethandiisocyanat.

2. Luftfilter nach Anspruch 1, gekennzeichnet durch eine Luftdurchlässigkeit zwischen seinen gegenüberliegenden, 10,0 mm beabstandeten Oberflächen von 80 bis 95 l/m².s, gemessen bei 0,02 mbar nach DIN EU 29 053A.

3. Luftfilter nach Anspruch 1 bis 2, dadurch gekennzeichnet, daß der Adsorber Aktivkohle ist.

4. Luftfilter nach Anspruch 3, dadurch gekennzeichnet, daß seine n-Butan-Adsorptionskapazität, gemessen in Anlehnung an DIN 71 460, Teil 2 (Entwurf November 1994), 199 mg/30 cm³ Filtervolumen beträgt bei einem Volumenstrom von 30 000 cm³/min, gemessen nach der Integralmethode, im Bereich von 0 % bis 95 % Durchbruch.

5. Verfahren zur Herstellung eines selbsttragenden, geformten Adsorptions-Luftfilters, gekennzeichnet durch die Schritte:
a) Herstellen eines Partikelgemisches durch Mischen bei Raumtemperatur und für 5 min von
70 bis 95 Gew.-% Adsorber-Partikeln regulärer oder irregulärer Gestalt mit einer mittleren Partikelgröße von 100 bis 7 000 µm mit
30 bis 5 Gew.-% Bindemittel-Partikeln regulärer oder irregulärer Gestalt mit einer mittleren Partikelgröße von 90 bis 5 % derjenigen der Adsorber-Partikeln, wobei der Schmelzbereich der Bindemittel-Partikeln kleiner ist als derjenige der Adsorber-Partikeln, und wobei das Bindemittel unter 100°C auf der Adsorber-Oberfläche nicht spreitet, wobei einer kleineren mittleren Größe der Adsorber-Partikeln der höhere Binderanteil zugeordnet ist;
b) Versetzen des Partikelgemisches mit 15 bis 70 Gew.-% Wasser, bezogen auf das Gesamtgemisch aus Adsorber, Bindemittel und Wasser;
c) Überführen des Gemisches als lockere Schüttung in den Hohlraum einer beheizbaren, druckdicht schließenden und für eine Druckbelastung von mindestens 10⁶ Pa ausgelegten Preßform;
d) druckdichtes Verschließen der Preßform;
e) Erhitzen des Gemisches in der geschlossenen Form für 5 bis 10 Minuten auf eine Temperatur von mindestens 100°C und mindestens 5°C oberhalb des Schmelzbereichs des Bindemittels, jedoch unterhalb des Schmelzbereichs des Adsorbers;
f) anschließende Dekompression unter Ablassen des Wasserdampfs aus dem Formwerkzeug und dem Formteil;
g) Abkühlenlassen des Formteils auf Raumtemperatur;
h) Entnehmen des entstandenen, selbsttragenden Formteils aus dem Formhohlraum;
wobei man als Bindemittel thermoplastische Polyurethan-Partikeln verwendet, deren Weichsegmentanteil Polycaprolacton und deren Hartsegmentanteil 1,4- Butandiol und 1,6- Hexandiol, kombiniert mit Diphenylmethandiisocyanat, ist, wobei das Polyurethan einen Schmelzbereich von 130 bis 140°C aufweist und dabei eine hochviskose Schmelze ausbildet, deren Viskosität sich von 130 bis 180°C nicht signifikant ändert.

6. Verfahren nach Anspruch 5, gekennzeichnet durch die Verwendung von Aktivkohle-Partikeln als Adsorber.

7. Verfahren nach Anspruch 5 oder 6, dadurch gekennzeichnet, daß man dem Wasser vor dem Vermischen wasserlösliche oder -dispergierbare, sorptionsfördernde Hilfssubstanzen zugibt.

8. Verfahren nach Anspruch 7, dadurch gekennzeichnet, daß man mindestens zwei Filter-Formteile flächig aufeinander kombiniert, welche jeweils verschiedene sorptionsfördernde Hilfssubstanzen enthalten.

9. Verfahren nach Anspruch 5 oder 6, dadurch gekennzeichnet, daß man die lockere Schüttung ausbildet als Schichtung aus mindestens zwei Adsorber/Bindemittel-Phasen, wobei man den einzelnen Phasen unterschiedliche Mengen sorptionsfördernder Substanzen beimischt.

## Claims

1. An adsorption air filter comprising a self-supporting moulded structure of adsorber particles of regular or irregular shape which are bound to one another by binder particles likewise of regular or irregular shape, the melting range of the binder particles being lower than that of the adsorber particles and the mean particle size of the binder particles being smaller than that of the adsorber particles, characterized in that the said self-supporting structure essentially has an irregular spatial distribution of adsorber particles and binder particles of this shape, in that the adsorber particles have a mean particle size of from 100 to 7000 µm, in that the binder material does not spread on the adsorber surfaces below 100°C, and in that this material is a thermoplastic polyurethane which has a melting range from 130 to 140°C, is present at from 130 to 180°C as a high-viscosity melt having essentially unchangeable viscosity over the entire melting range and is made up of a soft segment fraction of polycaprolactone and a hard segment fraction of 1,4-butanediol and 1,6-hexanediol with diphenylmethane diisocyanate.

2. An air filter according to Claim 1, characterized by an air permeability between opposite surfaces 10.0 mm apart of from 80 to 95 l/m².s, measured at 0.02 mbar as specified in DIN EU 29 053A.

3. An air filter according to either of Claims 1 and 2, characterized in that the adsorber is activated carbon.

4. An air filter as claimed in Claim 3, wherein its n-butane adsorption capacity, measured on the basis of DIN 71 460, part 2 (draft November 1994), is 199 mg/30 cm³ of filter volume at a volumetric flow rate of 30,000 cm³/min, measured by the integral method, in the range from 0% to 95% of breakthrough.

5. A process for producing a self-supporting, moulded adsorption air filter, characterized by the steps:
a) preparing a particle mixture by mixing at room temperature and for 5 minutes
from 70 to 95% by weight of adsorber particles of regular or irregular shape having a mean particle size of from 100 to 7000 µm with
from 30 to 5% by weight of binder particles of regular or irregular shape having a mean particle size from 90 to 5% of that of the adsorber particles, the melting range of the binder particles being lower than that of the adsorber particles, and the binder not spreading on the adsorber surface below 100°C, a smaller mean size of the adsorber particles being assigned to the higher binder fraction;
b) adding from 15 to 70% by weight of water to the particle mixture, based on the total mixture of adsorber, binder and water;
c) transferring the mixture as a loose bed into the cavity of a heatable pressure mould which closes pressure-tight and is designed for a pressure load of at least 10⁶ Pa;
d) closing the compression mould pressure-tightly;
e) heating the mixture in the closed mould for from 5 to 10 minutes to a temperature of at least 100°C and at least 5°C above the melting range of the binder, but below the melting range of the adsorber;
f) subsequent decompression and release of the water vapour from the mould tool and the moulded part;
g) allowing the moulded part to cool to room temperature;
h) removing the resulting self-supporting moulded part from the moulding cavity;
thermoplastic polyurethane particles being used as binder, the soft segment fraction of which binder is polycaprolactone and the hard segment fraction of which is 1.4-butanediol and 1,6-hexanediol, combined with diphenylmethane diisocyanate, the polyurethane having a melting range from 130 to 140°C and forming a high-viscosity melt, the viscosity of which does not change significantly from 130 to 180°C.

6. A process according to Claim 5, characterized by the use of activated carbon particles as adsorber.

7. A process according to Claim 5 or 6, characterized in that,prior to the mixing, water-soluble or water-dispersible, sorption-promoting auxiliary substances are added to the water.

8. A process according to Claim 7, characterized in that at least two moulded filter parts are combined on one another in a planar manner, which moulded parts each comprise various sorption-promoting auxiliaries.

9. A process according to Claim 5 or 6, characterized in that the loose bed is formed as a layering of at least two adsorber/binder phases, variable amounts of sorption-promoting substances being added to the individual phases.

## Revendications

1. Filtre d'adsorption pour le nettoyage de l'air, constitué par une structure autoportante et moulée de particules d'adsorbant de forme régulière ou irrégulière, reliées les unes aux autres par des particules d'agent liant, également de forme régulière ou irrégulière, la plage de fusion des particules d'agent liant étant inférieure à celle des particules d'adsorbant et la grosseur moyenne des particules d'agent liant étant inférieure à celle des particules d'adsorbant, caractérisé en ce que ladite structure autoportante présente une répartition spatiale essentiellement irrégulière de particules d'adsorbant et d'agent liant, de manière à ce que les particules d'adsorbant présentent une grosseur moyenne de 100 à 7000 µm, en ce que le matériau qui constitue l'agent liant ne peut pas être étalé sur la surface d'adsorbant au-dessous de 100 °C et en ce que ce matériau est un polyuréthanne thermoplastique, qui présente une plage de fusion de 130 à 140 °C, qui se présente entre 130 et 180 °C sous forme d'un bain de fusion à viscosité élevée, dont la viscosité est essentiellement invariable sur toute la plage de température et qui est constitué par une proportion de segments mous de polycaprolactone ainsi que par une proportion de segments durs de 1,4-butanediol et de 1,6-hexanediol avec du méthanediisocyanate de diphényle.

2. Filtre pour le nettoyage de l'air selon la revendication 1, caractérisé par une perméabilité à l'air entre ses surfaces opposées, distantes de 10,0 mm, comprise entre 80 et 95 l/m².s, mesurée à 0,02 mbar selon la norme DIN EU 29 053A.

3. Filtre pour le nettoyage de l'air selon la revendication 1 à 2, caractérisé en ce que l'adsorbant est du charbon actif.

4. Filtre pour le nettoyage de l'air selon la revendication 3, caractérisé en ce que sa capacité d'adsorption de n-butane, mesurée en suivant l'exemple de la norme DIN 71 460, 2ème partie (projet de novembre 1994), est de 199 mg/30 cm³ de volume de filtre, à un courant volumique de 30 000 cm³/min, mesurée selon la méthode intégrale, dans la plage de rupture de 0 % à 95 %.

5. Procédé pour la fabrication d'un filtre d'adsorption moulé et autoportant pour le nettoyage de l'air, caractérisé par les étapes suivantes :
a) la préparation d'un mélange de particules en mélangeant, à température ambiante et pendant 5 min, 70 à 95 % en poids de particules d'adsorbant, de structure régulière ou irrégulière, présentant une grosseur moyenne des particules de 100 à 7000 µm, avec 30 à 5 % en poids de particules d'agent liant de structure régulière ou irrégulière, présentant une grosseur moyenne des particules de 90 à 5 % par rapport à celle des particules d'adsorbant, la plage de fusion des particules d'agent liant étant inférieure à celle des particules d'adsorbant, l'agent liant ne pouvant pas être étalé sur la surface d'adsorbant au-dessous de 100 °C, une grosseur moyenne plus petite des particules d'adsorbant étant associée à une proportion plus élevée d'agent liant,
b) l'addition, au mélange de particules, de 15 à 70 % en poids d'eau, par rapport au mélange total d'adsorbant, d'agent liant et d'eau,
c) le transfert du mélange sous forme de produit peu compact en vrac dans l'espace creux d'un moule pouvant être chauffé, pouvant être fermé de manière étanche et prévu pour une charge en pression d'au moins 10⁶ Pa
d) la fermeture étanche du moule,
e) le chauffage du mélange dans le moule fermé pendant 5 à 10 minutes à une température d'au moins 100 °C et au moins 5 °C au-dessus de la plage de fusion de l'agent liant, mais toutefois au-dessous de la plage de fusion de l'adsorbant,
f) la décompression consécutive en évacuant la vapeur d'eau de l'outil de moulage et de la pièce moulée,
g) le refroidissement de la pièce moulée à température ambiante,
h) le prélèvement de la pièce moulée autoportante formée de l'espace creux de moulage,
en utilisant comme agent liant des particules de polyuréthanne thermoplastique, dont la proportion de segments mous est en polycaprolactone et la proportion de segments durs en 1,4-butanediol et 1,6-hexanediol, associés à du méthanediisocyanate de diphényle, le polyuréthanne présentant une plage de fusion de 130 à 140°C en formant un bain de fusion à viscosité élevée, dont la viscosité ne se modifie pas de manière significative de 130 à 180°C.

6. Procédé selon la revendication 5, caractérisé par l'utilisation de particules de charbon actif comme adsorbant.

7. Procédé selon la revendication 5 ou 6, caractérisé en ce qu'on ajoute à l'eau, avant le mélange, des adjuvants qui favorisent l'adsorption et qui sont solubles ou qui peuvent être dispersés dans l'eau.

8. Procédé selon la revendication 7, caractérisé en ce qu'on combine au moins deux pièces moulées de filtre à surface plane, qui contiennent chacune des adjuvants différents favorisant l'adsorption.

9. Procédé selon la revendication 5 ou 6, caractérisé en ce qu'on forme le produit peu compact en vrac sous forme de couches d'au moins deux phases d'adsorbant/agent liant, des substances favorisant l'adsorption étant ajoutées en des quantités différentes aux phases individuelles.
